# EUROPEAN PATENT APPLICATION

(11) **EP 2 259 578 A1**
(43) Date of publication of application: **08.12.2010**
(21) Application number: 10151466.9
(22) Date of filing: 22.01.2010
(51) Int. Cl.: H04N 5/445

(54) **Image display device and control method therefor**

(30) Priority: 29.05.2009 KR 20090047656
(71) Applicant: LG ELECTRONICS INC., Yeongdeungpo-gu Seoul 150-721 (KR)
(72) Inventor: Lee, Hong Jin, Kyungki-do 451-862 (KR); Kim, Gyu Seung, Kyungki-do 451-862 (KR); Lee, Jae Kyung, Kyungki-do 451-862 (KR); Lee, Kun Sik, Kyungki-do 451-862 (KR); Song, Jeom Ki, Kyungki-do 451-862 (KR)
(74) Representative: Cabinet Plasseraud

(57) **Abstract**

An image display device and a control method therefor are disclosed. The image display device manages the positions of objects by dividing its display screen into grids. Thus, overlap between objects is efficiently prevented and unnecessary computations for avoiding the overlap are relieved from a controller. Also, the displayed area of an object may be shifted in various patterns.

## Description

### BACKGROUND

### 1. Field

Embodiments of the present invention may relate to an image display device and a control method therefore. More particularly, embodiments of the present invention may relate to an image display device for managing a position of an object represented on a screen of a display that is divided into grids, and a control method therefor.

### 2. Background

An image display device may display video viewable to a user. The user may view broadcast programs through the image display device. The image display device may display a user-selected broadcast program on a display based on broadcast signals received from broadcasting stations. Broadcasting may be undergoing a transition from analog to digital.

Digital broadcasting may refer to broadcasting digital video and audio signals. Compared to analog broadcasting, digital broadcasting may be characterized by less data loss due to its robustness against external noise, effectiveness in error correction, high resolution, and clean and clear images. Digital broadcasting may enable interactive services, unlike analog broadcasting.

The transition from analog broadcasting to digital broadcasting and increasing user demands may be a driving force behind an increase in transmitted information or data. As a result, a plurality of objects directly representing information that is needed and/or should be known to a user are more frequently being displayed on a screen. Overlapped objects may hinder the user from easily recognizing information represented by the objects or become an obstacle to video viewing.

### BRIEF DESCRIPTION OF THE DRAWINGS

Arrangements and embodiments may be described in detail with reference to the following drawings in which like reference numerals refer to like elements and wherein:

FIG. 1 is a block diagram of an image display device according to an exemplary embodiment of the present invention;

FIGs. 2A and 2B are frontal perspective views of an image display device and a pointing device for entering a command to the image display device according to an exemplary embodiment of the present invention;

FIG. 3 is a block diagram of a pointing device and an interface of an image display device according to an exemplary embodiment of the present invention;

FIG. 4 is a flowchart of a method for controlling an image display device;

FIGs. 5A to 5D are views sequentially illustrating a method for controlling an image display device;

FIG. 6 is a flowchart of a method for controlling an image display device according to an exemplary embodiment of the present invention; and

FIGs. 7A to 8C illustrate screens on which images are displayed in a method for controlling an image display device according to exemplary embodiments.

### DETAILED DESCRIPTION

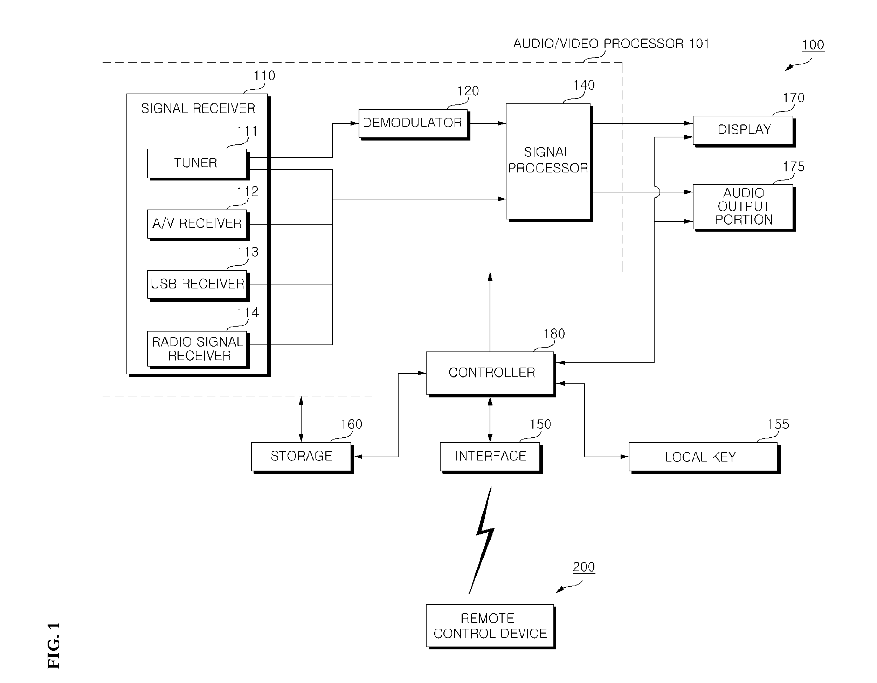

FIG. 1 is a block diagram of an image display device according to an exemplary embodiment of the present invention. Other embodiments and configurations may also be within the scope of the present invention.

FIG. 1 shows an image display device 100 that may include an audio/video processor 101, an interface 150, a local key 155, a storage 160, a display 170, an audio output portion 175 and a controller 180.

The audio/video processor 101 may process a received audio or video signal so as to output audio or video to the audio output portion 175 or the display 170. The audio/video processor 101 may include a signal receiver 110, a demodulator 120 and a signal processor 140. The signal receiver 110 may include a tuner 111, an Audio/Visual (A/V) receiver 112, a Universal Serial Bus (USB) receiver 113 and a Radio Frequency (RF) receiver 114.

The tuner 111 may select an RF broadcast signal of a user-selected channel from among a plurality of RF broadcast signals received through an antenna and downconvert the selected RF broadcast signal to an Intermediate Frequency (IF) signal or a baseband audio or video signal. For example, if the selected RF broadcast signal is a digital broadcast signal, the tuner 111 may downconvert the RF broadcast signal to a Digital IF (DIF) signal. If the selected RF broadcast signal is an analog broadcast signal, the tuner 111 may downconvert the RF broadcast signal to an analog baseband video or audio signal (Composite Video Banking Sync (CVBS)/Sound Intermediate Frequency (SIF)). That is, the tuner 111 may process a digital or analog broadcast signal. The analog baseband video or audio signal (CVBS/SIF) may be provided directly to the signal processor 140.

The tuner 111 may receive a single-carrier RF broadcast signal based on Advanced Television System Committee (ATSC) or a multi-carrier RF broadcast signal based on Digital Video Broadcasting (DVB).

The image display device 100 may include at least two tuners. Like a first tuner, a second tuner may select an RF broadcast signal of a user-selected channel from among RF broadcast signals received through the antenna and downconvert the selected RF broadcast signal to an IF signal and/or a baseband video or audio signal.

The second tuner may sequentially select RF signals of all broadcast channels that have been stored by a channel memory function from among received RF broadcast signals and downconvert the selected RF signals to IF signals or baseband video or audio signals. The second tuner may perform the downconversion of the RF signals of all broadcast channels periodically. The image display device 100 may provide video signals of a plurality of channels downconverted by the second tuner in thumbnails, while displaying the video of a broadcast signal downconverted by the first tuner. The first tuner may downconvert a user-selected main RF broadcast signal to an IF signal or a baseband video or audio signal, and the second tuner may select all RF broadcast signals except for the main RF broadcast signal sequentially/periodically and downconvert the selected RF broadcast signals to IF signals or baseband video or audio signals.

The demodulator 120 may demodulate the DIF signal received from the tuner 111. For example, if the DIF signal is an ATSC signal, the demodulator 120 may demodulate the DIF signal by 8-Vestigal Side Band (8-VSB). In another example, if the DIF signal is a DVB signal, the demodulator 120 may demodulate the DIF signal by Coded Orthogonal Frequency Division Multiple Access (COFDMA) demodulation.

The demodulator 120 may further perform channel decoding. For the channel decoding, the demodulator 120 may include a Trellis decoder, a deinterleaver and a Reed Solomon decoder for Trellis decoding, deinterleaving and Reed Solomon decoding, respectively.

After the demodulation and channel decoding, the demodulator 120 may output a Transport Stream (TS) signal. A video signal, an audio signal or a data signal may be multiplexed in the TS signal. For example, the TS signal may be a Moving Picture Experts Group-2 (MPEG-2) TS having an MPEG-2 video signal and a Dolby AC-3 audio signal multiplexed. More specifically, the MPEG-2 TS may include a 4-byte header and a 184-byte payload.

The TS signal may be provided to the signal processor 140. The signal processor 140 may demultiplex and process the TS signal and output a video signal to the display 170 and an audio signal to the audio output portion 175.

An image display device having at least two tuners may have a similar number of demodulators. Additionally, a demodulator may be separately provided for each of ATSC and DVB.

The signal receiver 110 may connect the image display device 100 to an external device. The external device may be an audio or video output device such as a DVD player, a radio, an audio player, an MP3 player, a camera, a camcorder, a game player, etc. The signal receiver 110 may provide an audio, video or data signal received from the external device to the signal processor 140 for processing the video and audio signals in the image display device 100.

In the signal receiver 110, the A/V receiver 112 may include a CVBS port, a component port, a S-video port (analog), a Digital Visual Interface (DVI) port, a High Definition Multimedia Interface (HDMI) port, a Red, Green, Blue (RGB) port, a D-SUB port, an Institute of Electrical and Electronics Engineers (IEEE) 1394 port, an Sony/Phillips Digital InterFace (SPDIF) port, a Liquid HD port, etc. in order to provide audio and video signals received from the external device to the image display device 100. Analog signals received through the CVBS port and the S-video port may be provided to the signal processor 140 after analog-to-digital conversion. Digital signals received through the other input ports may be provided to the signal processor 140 without analog-to-digital conversion.

The USB receiver 113 may receive audio and video signals through the USB port.

The Radio signal receiver 114 may connect the image display device 100 to a wireless network. The image display device 100 may access a wireless Internet through the Radio signal receiver 114. For connection to the wireless Internet, a communication standard may be used, such as Wireless Local Area Network (WLAN) (Wi-Fi), Wireless Broadband (WiBro), Worldwide Interoperability for Microwave Access (Wimax), High Speed Downlink Packet Access (HSDPA), etc. Further, the Radio signal receiver 114 may conduct short-range communications with another electronic device. For example, the Radio signal receiver 114 may be networked to another electronic device by a communication standard like Bluetooth, Radio Frequency Identification (RFID), InfraRed Data Association (IrDA), Ultra Wideband (UWB), ZigBee, etc.

The signal receiver 110 may connect the image display device 100 to a set-top box. For example, if the set-top box operates for Internet Protocol (IP) TV, the signal receiver 110 may transmit an audio, video or data signal received from the IPTV set-top box to the signal processor 140 and a processed signal received from the signal processor 140 to the IP TV set-top box.

The signal processor 140 may demultiplex a received TS signal (e.g., an MPEG-2 TS) into an audio signal, a video signal and a data signal. The signal processor 140 may also process the demultiplexed video signal. For example, if the demultiplexed video signal was coded, the signal processor 140 may decode the video signal. More specifically, if the demultiplexed video signal is an MPEG-2 coded video signal, an MPEG-2 decoder may decode the video signal. If the demultiplexed video signal was coded in compliance with H.264 for Digital Multimedia Broadcasting (DMB) or Digital Video Broadcasting-Handheld (DVB-H), an H.264 decoder may decode the video signal.

The signal processor 140 may control brightness, tint and/or color for the video signal. The video signal processed by the signal processor 140 may be displayed on the display 170.

The signal processor 140 may also process the demultiplexed audio signal. For example, if the demultiplexed audio signal was coded, the signal processor 140 may decode the audio signal. More specifically, if the demultiplexed audio signal is an MPEG-2 coded audio signal, an MPEG-2 decoder may decode the audio signal. If the demultiplexed audio signal was coded in compliance with MPEG 4 Bit Sliced Arithmetic Coding (BSAC) for terrestrial DMB, an MPEG 4 decoder may decode the audio signal. If the demultiplexed audio signal was coded in compliance with MPEG 2 Advanced Audio Codec (AAC) for satellite DMB or DVB-H, an AAC decoder may decode the audio signal.

The signal processor 140 may control base, treble and/or volume for the audio signal. The audio signal processed by the signal processor 140 may be provided to the audio output portion 175.

The signal processor 140 may also process the demultiplexed data signal. For example, if the demultiplexed data signal was coded, the signal processor 140 may decode the data signal. The coded data signal may be Electronic Program Guide (EPG) information including broadcasting information such as starts, ends, etc. of broadcast programs of each channel. For example, the EPG information may be ATSC-Program and System Information Protocol (ATSC-PSIP) information in case of ATSC. For DVB, the EPG information may include DVB-Service Information (DVB-SI). The ATSC-PSIP information or DVB-SI may be included in the 4-byte header of the above-described TS (i.e., MPEG-2 TS).

The signal processor 140 may display information graphically or in text on the display 170 based on at least one of the processed video and data signals or a user input signal received through a remote control device 200. The remote control device may also be referred to as a pointing device. The remote control device or the pointing device may be a mobile communication terminal, for example.

The signal processor 140 may be incorporated into the controller 160 as a single module.

The storage 160 (or memory) may store programs for signal processing and control operations of the controller 180 and store processed video, audio and/or data signals. The storage 160 may temporarily store video, audio and/or data signals received at the signal receiver 110.

The storage 160 may include a storage medium of at least one type of flash memory, hard disk, multimedia card micro type, card-type memory (e.g. Secure Digital (SD) or eXtreme Digital (XD) memory), Random Access Memory (RAM), and Read Only Memory (ROM) (e.g. Electrically Erasable Programmable ROM (EEPROM)). The image display device 100 may reproduce a file stored in the storage 160 (e.g. a moving picture file, a still image file, a music file, a text file, etc.) and provide the reproduced file to the user.

The controller 180 may provide overall control to the image display device 100. The controller 180 may receive a signal from the remote control device 200 via the interface 150. The controller 180 may identify a command input to the remote control device 200 by the received signal and control the image display device 100 according to the command. For example, upon receipt of a predetermined channel selection command from the user, the controller 180 may control the tuner 111 to provide a selected channel through the signal receiver 110. The controller 180 may control the signal processor 140 to process the audio and video signals of the selected channel. The controller 180 may control the signal processor 140 to output user-selected channel information along with the processed audio and video signals to the display 170 and/or the audio output portion 175.

In another example, the user may enter a different-type video and/or audio output command through the remote control device 200. The user may want to view a video signal of a camera or a camcorder received through the USB receiver 113 rather than a broadcast signal. The controller 180 may control the audio/video processor 101 such that an audio or video signal received through the USB receiver 113 of the signal receiver 110 may be processed by the signal processor 140 and output to the display 170 and/or the audio output portion 175.

Besides a command received through the remote control device 200, the controller 180 may identify a user command received through the local key 155 provided to the image display device 100 and control the image display device 100 based on the user command. For example, the user may enter an on/off command, a channel switch command, a volume change command, and/or the like for the image display device 100 through the local key 155. The local key 155 may include buttons and/or keys formed in the image display device 100. The controller 180 may determine whether the local key 155 has been manipulated and control the image display device 100 based on the determination.

The controller 180 may incorporate the signal processor 140 as a single module, for example.

The display 170 may display a broadcast image or an object based on a signal received from the controller 180.

The objects may include a variety of menus and/or widgets displayed on the display 170 for entering commands to the image display device 100 or for representing information related to the image display device 100.

The objects may refer to images and/or text indicating information about the image display device 100 or information about an image displayed on the image display device 100 such as an audio output level, channel information, a current time, etc. regarding the image display device 100. The objects may be configured in different forms (e.g. moving pictures) based on the types of information displayable or to be displayed on the image display device 100.

As an exemplary embodiment, a widget may be a Graphic User Interface (GUI) component that enables a user to directly change particular data.

The object may be one of a volume control button, a channel selection button, a menu, an icon, a navigation tab, a scroll bar, a progress bar, a text box, a window, and/or etc. displayed on the display 170 of the image display device 100. The type of an object configured in the image display device 100 may depend on the specification of a GUI that can or should be implemented in the image display device 100, although embodiments are not limited thereto.

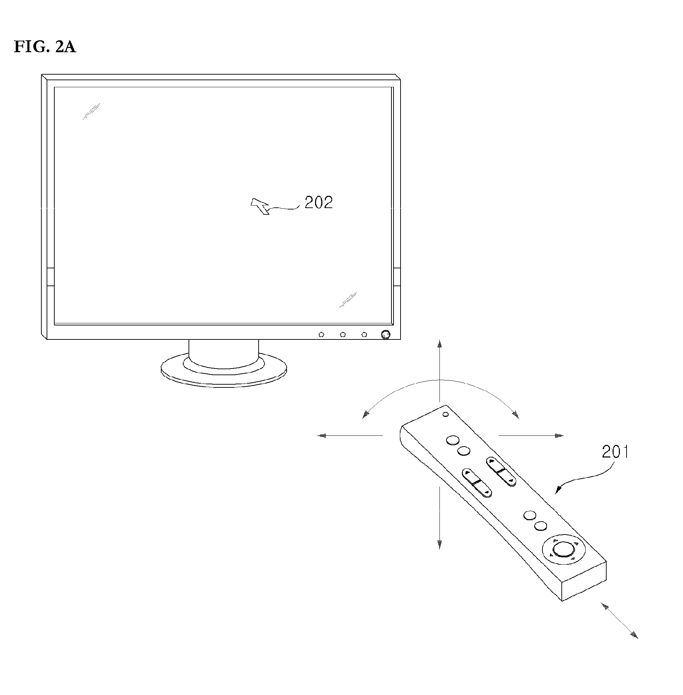

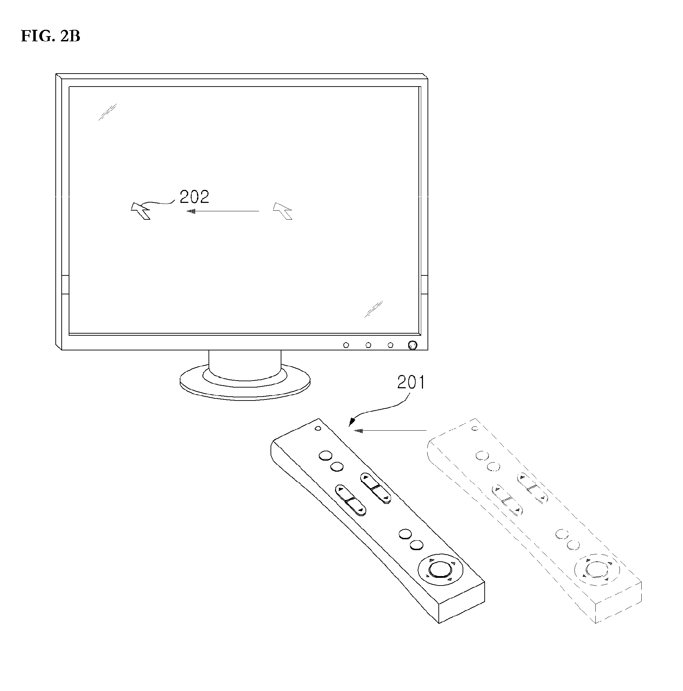

FIGs. 2A and 2B are frontal perspective views of the image display device 100 and a pointing device 201 for entering a command to the image display device 100 according to an exemplary embodiment of the present invention. Other embodiments and configurations may also be within the scope of the present invention.

The pointing device 201 may be a kind of the remote control device 200 for entering a command to the image display device 100. The remote controller 201 may also be referred to as a pointing device. The remote controller 201 or the pointing device may be a mobile communication device, for example. The pointing device 201 may transmit and receive signals to and from the image display device 100 in compliance with an RF communication standard. As shown in FIG. 2A, a pointer 202 corresponding to the pointing device 201 may be displayed on the image display device 100.

The user may move the pointing device 201 up, down, left, right, forward or backward, and/or rotate the remote controller 201. The pointer 202 may move on the image display device 100 in correspondence with movement and/or rotation of the pointing device 201.

FIG. 2B illustrates a movement of the pointer 202 on the image display device 100 based on a movement of the remote controller 201. As shown in FIG. 2B, when the user moves the pointing device 201 to the left, the pointer 202 may also move to the left on the image display device 100. The pointing device 201 may include a sensor for sensing movement of the remote controller 201. Information about movement of the pointing device 201 as sensed by the sensor may be provided to the image display device 100. The image display device 100 may determine the movement of the remote controller 201 based on the received information and calculate coordinates of the pointer 202 based on the movement of the remote controller 201.

In FIGs. 2A and 2B, the pointer 202 may move on the image display device 100 in correspondence with an upward, downward, left and/or right movement or rotation of the pointing device 201. The velocity and/or direction of the pointer 202 may correspond to that of the pointing device 201. The pointer 202 may move on the image display device 100 in correspondence with movement of the pointing device 201. A movement of the pointing device 201 may trigger entry of a predetermined command to the image display device 100. If the pointing device 201 may move forward or backward, an image displayed on the image display device 200 may be enlarged and/or contracted (i.e., reduced).

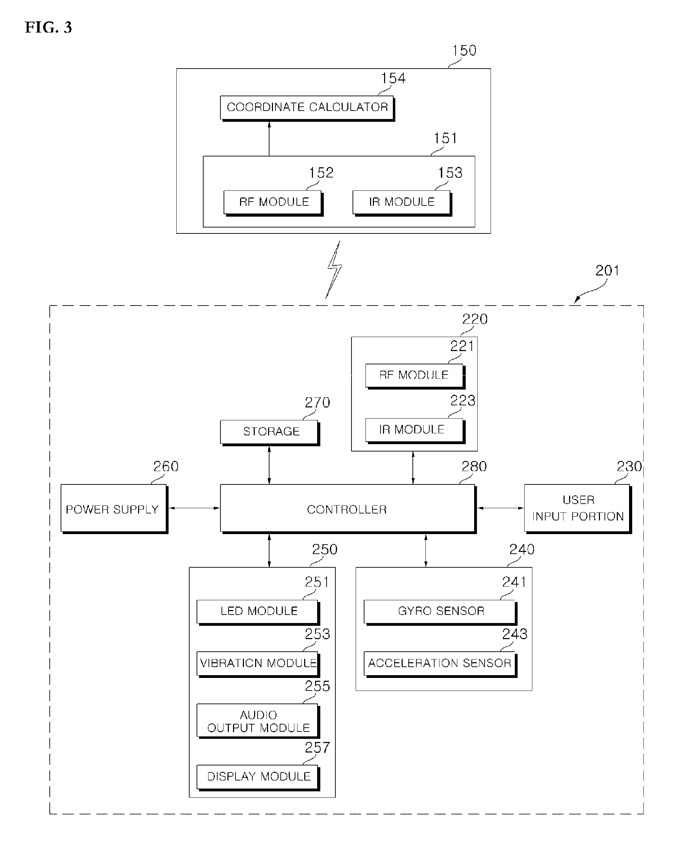

FIG. 3 is a block diagram of the pointing device 201 and the user interface 150 of the image display device 100 according to an exemplary embodiment of the present invention. Other embodiments and configurations may also be within the scope of the present invention.

The pointing device 201 may include a radio transceiver 220, a user input portion 230, a sensor portion 240, an output portion 250, a power supply 260, a storage 270 (or memory) and a controller 280.

The radio transceiver 220 may transmit and receive signals to and from the image display device 100. The pointing device 201 may be provided with a radio frequency (RF) module 221 for transmitting and receiving signals to and from the interface 201 of the image display device 100 based on an RF communication standard. The pointing device 201 may include an infrared (IR) module 223 for transmitting and receiving signals to and from the interface 150 of the image display device 100 based on an IR communication standard. Accordingly, the remote controller 201 (or pointing device) may include a first wireless communication module (i.e., the RF module 221) and a second wireless communication module (i.e., the IR module 223).

The pointing device 201 may transmit a signal carrying information about an operation of the pointing device 201 to the image display device 100 through the RF module 221. The pointing device 201 may receive a signal from the image display device 100 through the RF module 221. The pointing device 201 may transmit commands associated with power on/off, channel switching, volume change, etc. to the image display device 100 through the IR module 223.

The user input portion 230 may be configured with a keypad and/or buttons. The user may enter a command related to the image display device 100 to the pointing device 201 by manipulating the user input portion 230. If the user input portion 230 includes hard key buttons, the user may enter commands related to the image display device 100 to the pointing device 201 by pushing the hard key buttons. If the user input portion 230 is provided with a touch screen, the user may enter commands related to the image display device 100 to the pointing device 201 by touching soft keys on the touch screen. The user input portion 230 may have a variety of input means the user can manipulate, such as a scroll key, a zog key, etc., although embodiments are not limited thereto.

The sensor portion 240 may include a gyro sensor 241 and/or an acceleration sensor 243. The gyro sensor 241 may sense information about an operation of the pointing device 201. For example, the gyro sensor 241 may sense information about an operation of the pointing device 201 along x, y and z axes. The acceleration sensor 243 may sense information about velocity of the pointing device 201.

The output portion 250 may output a video or audio signal corresponding to a manipulation of the user input portion 230 or a signal transmitted by the image display device 100. The user may be aware from the output portion 250 whether the user input portion 230 has been manipulated or the image display device 100 has been controlled.

For example, the output portion 250 may include a Light Emitting Diode (LED) module 251 for illuminating when the user input portion 230 has been manipulated or a signal is transmitted to or is received from the image display device 100 through the radio transceiver 220, a vibration module 253 for generating vibrations, an audio output module 255 for outputting audio and/or a display module 257 for outputting video.

The power supply 260 may supply power to the pointing device 201. When the pointing device 201 is kept stationary for a predetermined time period, the power supply 260 may block (or reduce power) for the pointing device 201. When a predetermined key of the pointing device 201 is manipulated, the power supply 260 may resume power supply.

The storage 270 (or memory) may store a plurality of types of programs for control or operation of the pointing device 201 and/or application data. When the pointing device 201 wirelessly transmits and receives signals to and from the image display device 100 through the RF module 221, the signal transmission and reception may be carried out in a predetermined frequency band. The controller 280 of the pointing device 201 may store information about the frequency band in which to wirelessly transmit and receive signals to and from the image display device 100 paired with the pointing device 201 and refer to the information.

The controller 280 may provide overall control to the pointing device 201. The controller 280 may transmit a signal corresponding to a predetermined key manipulation on the user input portion 230 and/or a signal corresponding to an operation of the pointing device 201 sensed by the sensor portion 240 to the interface 150 of the image display device 100 through the radio transceiver 220.

The interface 150 of the image display device 100 may have a radio signal transceiver 151 for wirelessly transmitting and receiving signals to and from the pointing device 201, and a coordinate calculator 154 for calculating coordinates of the pointer 202 corresponding to an operation of the pointing device 210.

The interface 150 may wirelessly transmit and receive signals to and from the pointing device 201 through the RF module 152. The interface 150 may also receive a signal based on an IR communication standard from the pointing device 201 through the IR module 153.

The coordinate calculator 154 may calculate the coordinates (x, y, z) of the pointer 202 to be displayed on the display 170 by correcting handshaking or errors from a signal corresponding to an operation of the pointing device 201 received through the radio signal transceiver 151.

A signal received from the pointing device 201 through the interface 150 may be provided to the controller 180 of the image display device 100. The controller 180 may identify information about an operation of the pointing device 201 or a key manipulation on the pointing device 201 from the received signal and control the image display device 100 based on the information.

In another example, the pointing device 201 may calculate coordinates of the pointer 202 corresponding to its operation and output the coordinates to the interface 150 of the image display device 100. The interface 150 of the image display device 100 may then transmit information about the received coordinates to the controller 180 without correcting handshaking or errors.

FIGs. 1, 2 and 3 illustrate the image display device 100 and the pointing device 201 as the remote control device 200. Components of the image display device 100 and the pointing device 201 may be integrated or omitted and/or a new component may be added based on their specifications. That is, two or more components may be incorporated into a single component or one component may be configured to be divided into two or more separate components. The function of each block is presented for illustrative purposes, and does not limit the scope of embodiments of the present invention.

The objects may include various kinds of widgets displayed on the display 170 to enter commands to the image display device 100 and/or to represent information related to the image display device 100. The widgets may be represented as On Screen Display (OSD).

The objects may include images and/or text indicating information about the image display device 100 or information about an image displayed on the image display device 100 such as an audio output (volume) level, channel information, a current time, etc. regarding the image display device 100. The objects may be configured in different forms (e.g. moving pictures) based on the types of information displayable or to be displayed on the image display device 100.

As one example, an object may be a widget. The widget may be a GUI component that enables a user to directly change particular data. For example, the widget may be one of a volume control button, a channel selection button, a menu, an icon, a navigation tab, a scroll bar, a progress bar, a text box, a window, and/or etc. displayed on the display 170 of the image display device 100. The type of a widget configured in the image display device 100 may depend on a specification of a GUI that can or should be implemented in the image display device 100, although embodiments are not limited thereto.

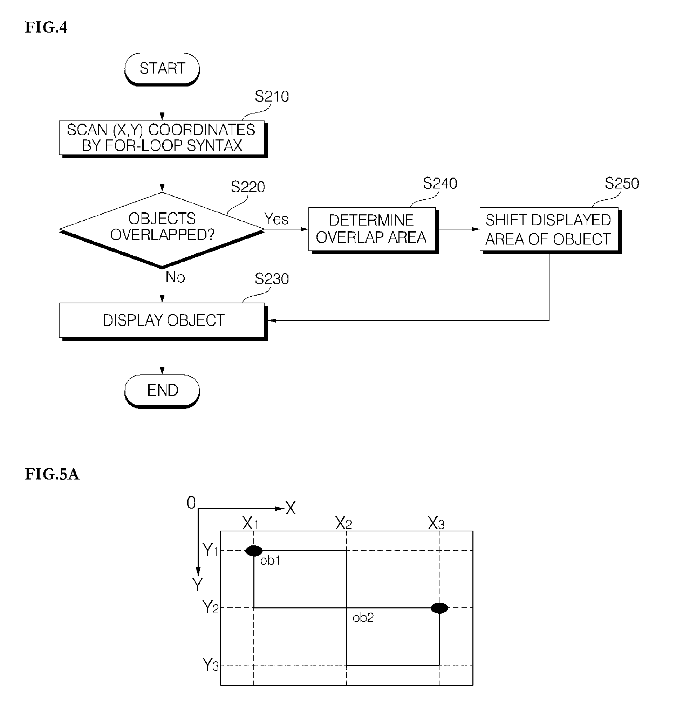

FIG. 4 is a flowchart illustrating a method for controlling an image display device. More specifically, the flowchart shows a control method for preventing overlap between displayed objects.

As shown in FIG. 4, upon receipt of an object display command, a search may be performed in operation S210 by scanning (X, Y) coordinates of an entire screen using a for-loop syntax in order to determine whether another object is displayed.

In operation S220, a determination is made whether another object exists in an area where a new object is to be displayed. Stated differently, a determination is made whether objects overlap. If the two objects do not overlap with each other, the new object may be immediately displayed in operation S230.

On the other hand, if the two objects overlap, an overlap area between the objects may be determined in operation S240 and the displayed area of the new object may be shifted in operation S250.

A trend of image displaying may be toward large-size image display devices and an increase in a number of pixels. The decision of whether the objects overlap (operation S220) and the determination as to an area over which the objects overlap (operation S240) may be made using (X,Y) coordinates and widths and heights of the coordinates. The entire screen may be scanned using the for-loop syntax. As more (X,Y) coordinates are to be scanned, a computation complexity may increase and a time delay may occur, thereby slowing down an object display process. As more objects are displayed on one screen, the for-loop syntax may be repeated more times. Consequently, the object display process may get slower.

Operation S220 and operation S240 may be further described with reference to FIGs. 5A to 5D. FIGs. 5A to 5D are views sequentially illustrating a method for controlling an image display device.

FIGs. 5A to 5D show a first object ob1 and a second object ob2 separated on a screen. This is merely illustrative to help understanding of a search using the (X,Y) coordinates of the first object ob1 and the second object ob2.

As shown in FIG. 5A, reference X coordinates X₁ and X₃ of the first object ob1 and the second object ob2 may be compared. If X₁ is less than X₃, then the two objects are probable to overlap and thus the procedure goes to a next operation. That is, if X₁ is less than X₃, there is a probability that the two objects overlap according to their widths or Y coordinates. It may be determined in a next operation whether the two objects ob1, ob2 overlap. While the reference X coordinate of the second object ob2 may be set as a left corner, a description may be made herein with an appreciation that it is set as a right corner.

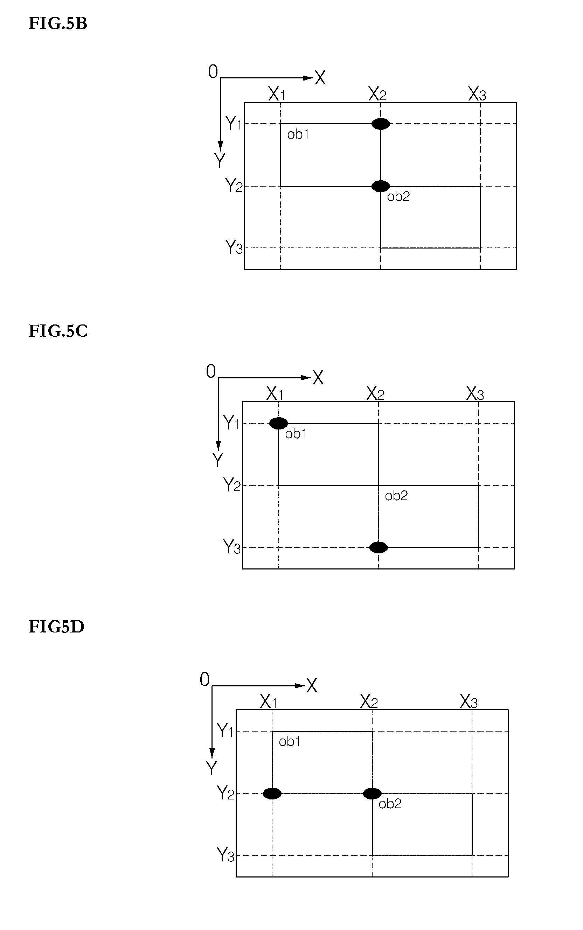

Referring to FIG. 5B, an X coordinate being a sum of the reference X coordinate and width of the first object ob1, for example, X₂ is compared with an X coordinate resulting from subtracting a width of the second object ob2 from the reference X coordinate of the second object ob2 to thereby determine whether the two objects overlap. If X₂ is larger than or equal to the X coordinate resulting from the subtraction for the second coordinate ob2, a determination may be made that the first object and the second object overlap.

Referring to FIG. 5C, reference Y coordinates Y₁ and Y₃ of the first object ob1 and the second object ob2 may be compared. If Y₁ is less than Y₃, then the two objects ob1, ob2 are probable to overlap and thus procedure goes to a next operation.

Referring to FIG. 5D, a Y coordinate being the sum of the reference Y coordinate and a height of the first object ob1, for example, Y₂ is compared with an Y coordinate resulting from subtracting a height of the second object ob2 from the reference Y coordinate of the second object ob2 to thereby determine whether the two objects overlap. If Y₂ is larger than or equal to the Y coordinate resulting from the subtraction for the second coordinate ob2, a determination may be made that the first object and the second object overlap.

The overlapped area between the first object ob1 and the second object ob2 may be calculated based on the coordinates that are compared in FIGs. 5B and 5D.

As described above, the image display device may check the (X,Y) coordinates of objects and perform computations each time an object is displayed. Therefore, as the image display device increases in size and more objects are displayed, a computation speed may be decreased and an object display process may slow down.

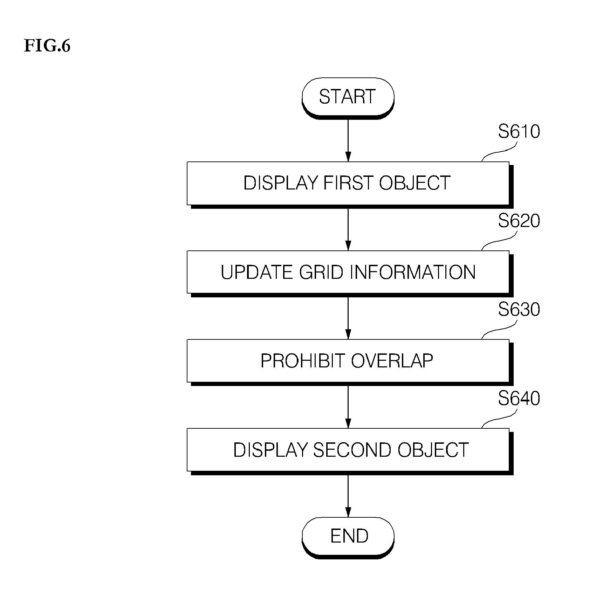

FIG. 6 is a flowchart illustrating a method for controlling an image display device according to an exemplary embodiment of the present invention. Other operations, orders of operations and embodiments may also be within the scope of the present invention.

As shown in FIG. 6, a method for operating the image display device may include displaying a first object on a first area in operation S610, updating grid information of grids(a first grid), which overlaps with the first area S620, and prohibiting the overlapping of a second object with the first object based on the updated grid information in operation S630. And, displaying the second object in operation S640 or moving the second object to a second area When there is an order to display a second object on the first area may be added.

Grid information of a grid may include an information value indicating whether an object is displayable in the grid. If the displayed position of an object is managed on a grid basis, collision between an existing object and a new object and displayability of the new object in a grid may be decided by checking the grid information of the displayed areas of the existing object and the new object, and more specifically object displayability. Therefore, despite an increasing size of the screen of the display, the display may have a high processing speed because the increasing screen size may not affect a computation speed.

Aside from a new object, when an existing object moves, for example, in a drag-and-drop manner, a determination may be made whether the existing object can be displayed in an intended grid by checking the grid information of the grid. If the existing object can not be displayed in the intended grid, the existing object may be shifted to a second grid whose grid information indicates that it is displayable. Overlap between objects may thereby be efficiently prevented.

Grid information may be changed (or updated) to prevent another object from being displayed later in the second grid. That is, the grid information of the second grid may be set to non-displayable.

In operation S640, the object may be displayed when the object is displayable or after the displayed area is moved.

The determination as to whether the object is displayable may be made by checking whether there is an overlap between objects (i.e., another object is displayed in an area where the object is to be displayed).

The determination of whether the object is displayable in the first grid which overlaps with the first area may be performed by checking the grid information of the first grid because the grid information of each grid may indicate whether an object is displayable.

If the object is not displayable in the first grid, a grid available for displaying the grid may be selected by referring to the grid information of grids of the screen of the display. The second grid may be the selected grid. For example, the second grid may be found by checking the grid information of a neighboring grid of the first grid. The second grid may also be found by checking grid information, starting from a predetermined area based on priority.

The object may be displayed in any OSD display fashion. The object may be a widget that is updatable through the Internet, wireless communications, etc.

The updated grid information may further includes information about grids in which the second object is displayable In addition to information about disability of an object, the grid information may include information about position of a grid to which the object is to be moved, a movement pattern, etc. when the object is not displayable. Accordingly, there may not be a need for detecting the second area or grid to which the object is to move, thereby increasing a computation speed and an object display processing speed.

The second grid of the second area may be neighboring to the first grid of the first area and/or at least one grid may be provided between the first grid and the second grid. That is, the second grid may be adjacent to the first grid or the second grid may not be adjacent to the first grid.

In setting the grid, the screen of the display may be divided into grids, with each grid being larger than a pixel. There may not be a need for matching a grid to a pixel. When each grid includes a plurality of pixels, a processing speed may be further increased for a large-size screen. Each grid may comprise M * N pixels.

In referring to the grid information, the grid information of the first grid in which an object corresponding to a command received from the pointing device 201 is to be displayed may be referred to. The displayed area of an object may be set by the controller and/or pointed at by a pointer under control of the remote control device 200 of the user. If the remote control device 200 is a pointing device, it may be configured such that movement and display of an object may correspond to an operation of the pointing device 201. Consequently, a determination may be made whether an object is displayable in a grid corresponding to a command from the pointing device 201 by checking the grid information of the grid before the object is displayed in the grid.

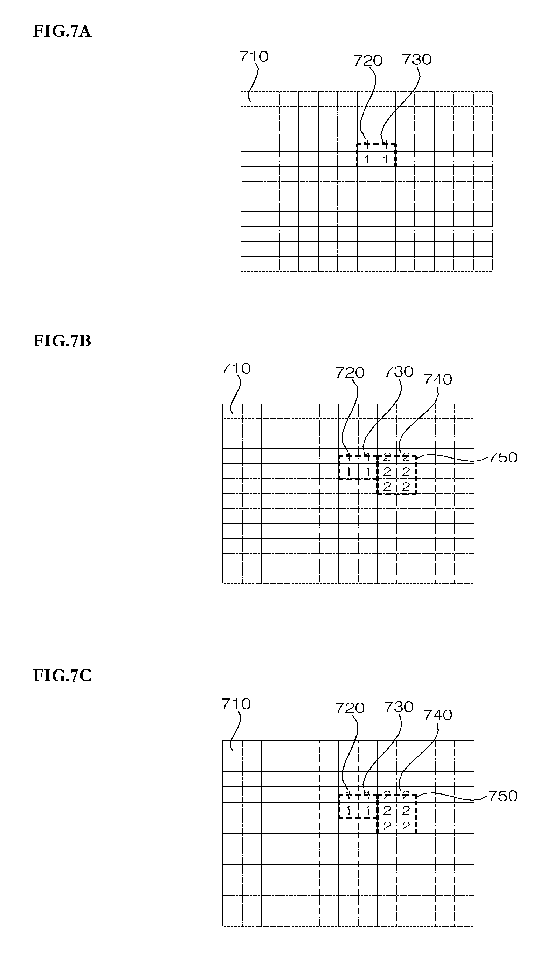

FIGs. 7A, 7B and 7C illustrate a screen on which images are displayed in a method for controlling an image display device according to an exemplary embodiment of the present invention. Other embodiments and configurations may also be within the scope of the present invention.

As shown in FIG. 7A, the screen of the display may be divided into grids 710, thus having a lattice structure. Grid information indicating object displayable or non-displayable may be set for each grid 710. A first object 730 may be displayed in a first grid 720. The first object 730 may be outlined with a dotted line for ease of convenience, and the object 730 may have various pieces of information. When a second object 750 (FIG 7B) is to be displayed in the first grid 720, the grid information of the first grid 720 may be checked before the second object 750 is displayed. When a determination is made that the second object 750 is not displayable in the first grid 720 due to existence of the first object 730 in the first grid 720, the displayed area of the second object 750 may be changed to a second grid 740 (FIG. 7B).

As shown in FIG. 7B, the second object 750 may be displayed in the second grid 740. The second grid 740 may be searched for by checking grid information, starting from neighboring grids of the first grid 720. The second grid 740 may also be searched for by checking grid information starting from a predetermined area based on priority level.

When information about position of the second grid 740 is included in the grid information of the first grid 720, the displayed area of the second object 750 may be moved without search.

As shown in FIG. 7B, the second grid 740 may be neighboring to the first grid 720 and the displayed area of the second object 750 may be shifted to the second grid 740. As shown in FIG. 7C, at least one grid may exist between the first grid 720 and the second grid 740 so that the displayed area of the second object 750 may change to the second grid 740 away from the first grid 720. Accordingly, the displayed area of an object may be changed in various patterns.

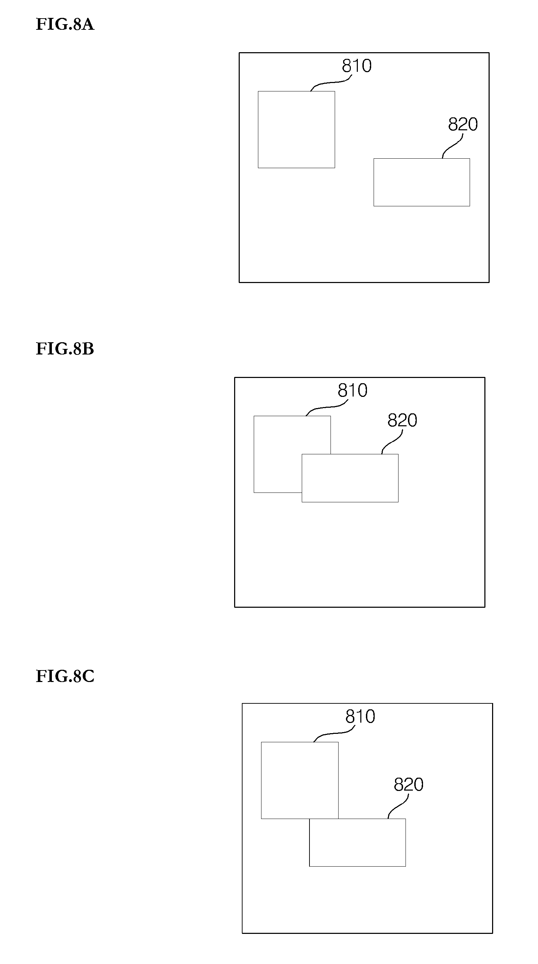

FIGs. 8A, 8B and 8C illustrate a screen on which images are displayed in a method for controlling an image display device according to an exemplary embodiment of the present invention. Other embodiments and configurations may also be within the scope of the present invention.

As shown in FIG. 8A, a first object 810 and a second object 820 may be displayed on the screen of the display. When the second object 820 moves by drag-and-drop as shown in FIG. 8B, grid information may be checked of a first grid in which the second object 820 is to be displayed. Since the first object 810 may occupy at least part of the first grid, the grid information of the first grid may indicate non-displayable. The second object 820 may be displayed in a second grid where it does not overlap with the first object 810, as shown in FIG. 8C.

An image display device may include the display 170 for displaying a screen divided into grids. , and the controller 180 for displaying a first object on a first area, updating grid information of grids, which overlaps with the first area, and prohibiting the overlapping of a second object with the first object based on the updated grid information.

Since position of an object may be managed by dividing the screen of the display into grids, overlap between objects may be efficiently prevented and unnecessary computations of the controller for overlap prevention may be avoided.

The controller 180 may change the grid information of the second grid to non-displayable so that another object may not be displayed in the second grid.

If it is determined that the object is not displayable in the first grid, the controller 180 may select the second grid in which the object is displayable through a search by referring to the grid information of grids in the screen. The controller 180 may set information about the second grid available for the object in the grid information of the first grid so that the controller 180 may control the displayed area of the object to be shifted to the second grid without the search when attempting to display the object in the first grid.

The second grid may neighbor the first grid or at least one grid may be provided between the first grid and the second grid. The shift pattern of the displayed area of the object may vary.

Each grid may be set to be larger than a pixel, thereby further increasing a computation speed.

The controller 180 may control the first grid in correspondence with a user-input command received from the pointing device 201, rather than arbitrarily. The controller 180 may determine whether objects are overlapped and the first grid is available by referring to the grid information of the first grid.

If the objects overlap, the controller 180 may control the second grid to which the displayed area of the object is shifted to correspond to the pointing device.

Embodiments of the present invention may provide an image display device for efficiently preventing overlap between objects, and a control method therefor.

A method may be provided for controlling an image display device, including dividing a screen of a display of the image display device into grids and setting grid information for each grid. The method may also include determining whether an object is displayable in a first grid, referring to grid information of the first grid in which at least part of the object is to be displayed, and changing a displayed area of the object to a second grid, when it is determined that the object is not displayable in the first grid.

An image display device may be provided that includes a display for displaying a screen divided into grids, and a controller for setting grid information for each grid, for determining whether an object is displayable in a first grid, for referring to grid information of the first grid in which the object is to be displayed, and for controlling the object to be displayed in a second grid when it is determined that the object is not displayable in the first grid.

Exemplary embodiments of the present invention may be embodied as processor-readable codes on a processor-readable recording medium provided in an image display device. The processor-readable recording medium may be any data storage device that can store data that can thereafter be read by a process. Examples of the processor-readable recording medium may include, but are not limited to, optical data storages such as ROM, RAM, CD-ROMs, magnetic tapes, floppy disks, optical data storage devices, and carrier waves (such as data transmission through the Internet via wired or wireless transmission paths). The processor-readable recording medium may also be distributed over network-coupled computer systems so that the processor-readable code is stored and executed in a distributed fashion.

Any reference in this specification to "one embodiment," "an embodiment," "example embodiment," etc., means that a particular feature, structure, or characteristic described in connection with the embodiment is included in at least one embodiment of the invention. The appearances of such phrases in various places in the specification are not necessarily all referring to the same embodiment. Further, when a particular feature, structure, or characteristic is described in connection with any embodiment, it is submitted that it is within the purview of one skilled in the art to effect such feature, structure, or characteristic in connection with other ones of the embodiments.

Although embodiments have been described with reference to a number of illustrative embodiments thereof, it should be understood that numerous other modifications and embodiments can be devised by those skilled in the art that will fall within the spirit and scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. A method of displaying objects on a display device, the method comprising:
displaying a first object on a first area;
updating information of grids that overlap with the first area; and
prohibiting the overlapping of a second object with the first object based on the updated grid information.

2. The method according to claim 1, further comprising displaying the second object on a second area.

3. The method according to claim 1, wherein when there is an order to display the second object, moving the second object to a second area away from the first area.

4. The method according to claim 1, further comprising:
selecting a second grid in which the second object is displayable by referencing grid information of grids of a screen, when the second object is not displayable in a first grid.

5. The method according to claim 4, further comprising:
changing grid information of the second grid to prevent another object from being displayed in the second grid.

6. The method according to claim 4, wherein the grid information of the first grid includes information about the second grid in which the object is displayable.

7. The method according to claim 4, wherein the second grid is neighboring to the first grid.

8. The method according to claim 4, wherein at least one grid exists between the first grid and the second grid.

9. The method according to claim 4, wherein prohibiting the overlapping includes determining whether the object is displayable by referring to the grid information based on a command received from a pointing device.

10. The method according to claim 4, further comprising setting the grid information by dividing the screen into grids with each grid being larger than a pixel.

11. An image display device comprising:
a display (170) for displaying a first object on a first area; and
a controller (180) for updating information of grids that overlap with the first area and prohibiting the overlapping of a second object with the first object based on the updated grid information.

12. The image display device according to claim 11, wherein the display (170) displays the second object on a second area.

13. The image display device according to claim 11, wherein when there is an order to display the second object, the controller (180) moves the second object to a second area away from the first area.

14. The image display device according to claim 11, wherein the controller (180) selects a second grid in which the second object is displayable by referencing grid information of grids of a screen when the controller (180) determines that the second object is not displayable in a first grid.

15. The image display device according to claim 14, wherein the controller (180) changes grid information of the second grid to prevent another object from being displayed in the second grid.
